# FASCICULE DE BREVET EUROPEEN

(11) **EP 1 514 778 B1**
(45) Date de publication et mention de la délivrance du brevet: **02.07.2008**
(21) Numéro de dépôt: 04300552.9
(22) Date de dépôt: 23.08.2004
(51) Int. Cl.: B62D 65/02, B62D 25/06

(54) **Système de butée pour le positionnement latéral relatif d'éléments de carrosserie automobile**
Anschlagvorrichtung zum relativen Seitenpositionieren von Elementen von einer Kraftfahrzeug-Karosserie
Abutment device for the relative side positioning of elements of an automobile body

(30) Priorité: 12.09.2003 FR 0350528
(43) Date de publication de la demande: 16.03.2005
(73) Titulaire: RENAULT S.A.S., 92100 Boulogne Billancourt (FR)
(72) Inventeur: Guillemot, Claude, 92160, Antony (FR); Stephan, Jean Luc, 78550, Richebourg (FR)

(56) Documents cités:
- DE-A- 3 150 027
- DE-A- 19 714 631

## Description

### Domaine de l'invention

L'invention concerne le domaine des éléments de structure ou de carrosserie de véhicule automobile, et plus particulièrement le positionnement relatif des éléments constitutifs de la carrosserie entre eux, tels que le côté de caisse, la doublure de caisse et le renfort placé entre ces deux derniers, au niveau de la jonction du toit et d'un montant de portière.

### Art antérieur et problème posé

Un système de butée pour le positionnement relatif d'éléments de carrosserie conformément au préambule de la revendication 1 est connu du document DE 3150027 A.

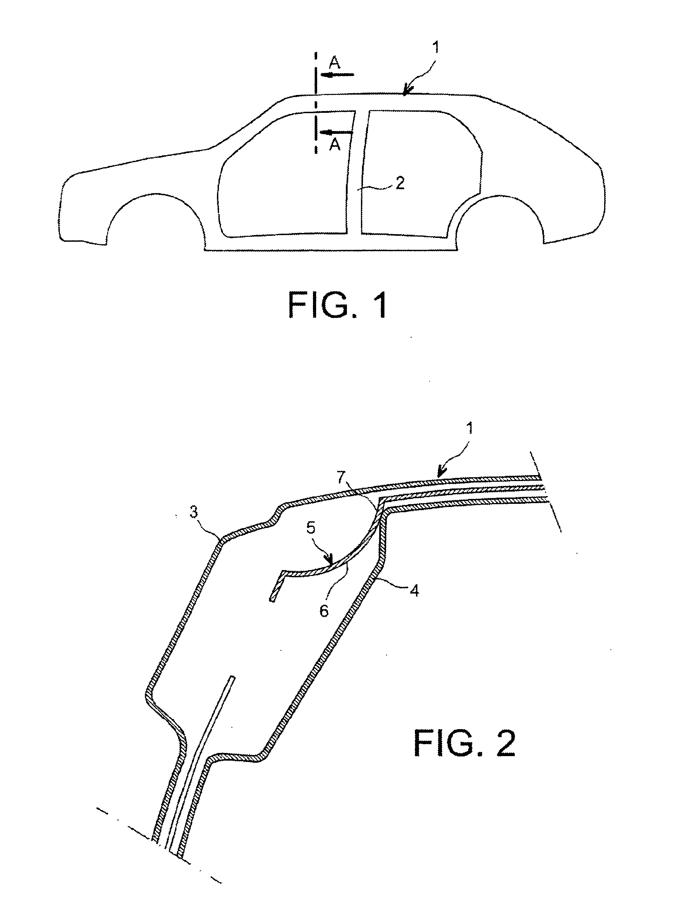

En référence à la figure 1, l'invention se rapporte en particulier, mais pas nécessairement, à la jonction du toit 1 et du côté de caisse, au niveau de l'habitacle, ceci de préférence à l'avant et à l'arrière du montant 2 séparant les deux portières latérales. Le trait mixte, en caractère gras, coupant le toit 1 à ce niveau permet de localiser une coupe A-A nécessaire pour définir la figure 2.

Cette dernière est donc une coupe selon la ligne A-A de la figure 1 et permet de visualiser trois éléments principaux constituant la carrosserie à ce niveau, à savoir un côté de caisse 3, placé à l'extérieur, une doublure de caisse 4 placée à l'intérieur, et un renfort de caisse 5 placé entre les deux.

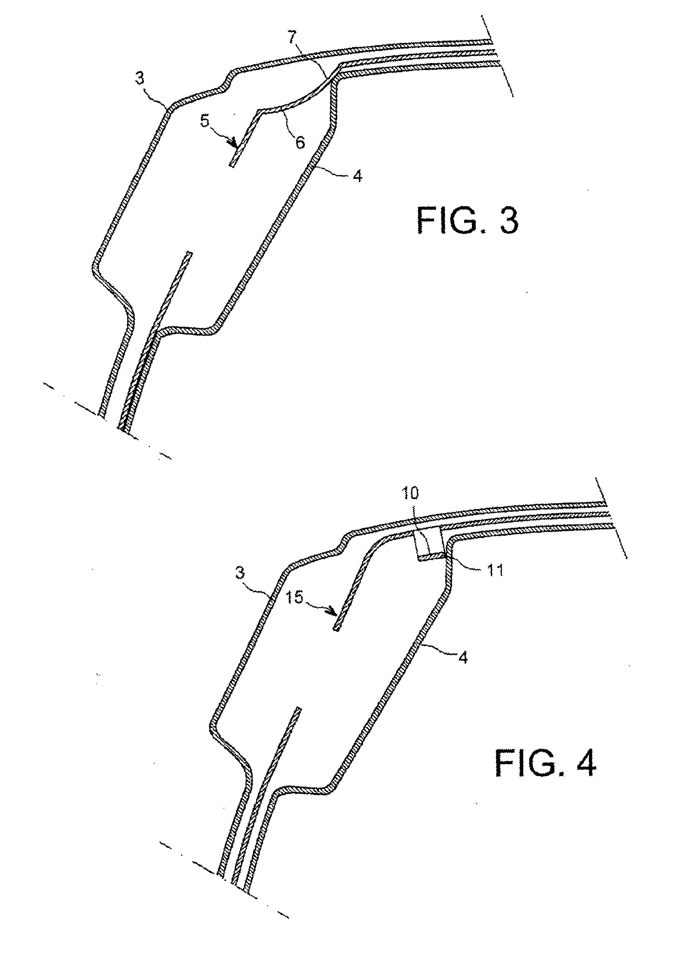

Un des problèmes, lors du montage de cet ensemble, e st le positionnement du renfort 5 sur la doublure de caisse 4, puis du côté de la caisse 3 par rapport à l'ensemble constitué du renfort 5 et de la doublure de caisse 4. Une butée 6 est prévue pour permettre le positionnement du renfort 5, selon l'axe transversal du véhicule, par rapport à la doublure de caisse 4. Cette butée 6 est généralement constituée d'une partie emboutie de forme bombée. La base 7 de cette butée 6, faisant jonction avec la partie du renfort 5 au niveau du toit 1 présente donc une surface faisant office de butée permettant de positionner le renfort 5 par rapport à la doublure de caisse 4, comme le montre la figure 3. Cette même figure montre que la base 7 de la butée 6 constituée d'une partie arrondie présente un inconvénient concernant la précision du positionnement latéral du renfort 5 sur la doublure de caisse 4. En effet, suivant la hauteur de positionnement du renfort 5 par rapport à la doublure de caisse 4, la position latérale relative de ces deux éléments peut varier. De plus, si la profondeur d'emboutissage, lors de la fabrication de la butée 6 n'est pas assez grande, la base 7 de cette dernière ne sera pas positionnée, sur le renfort 5, au bon endroit. En conséquence, le renfort 5 ne sera pas positionné latéralement de façon correcte par rapport à la doublure de caisse 4. La partie emboutie constituant la butée 6 a donc besoin d'une profondeur suffisamment grande et donc d'une longueur également grande. Ceci altère les caractéristiques mécaniques du renfort 5 au niveau de la butée 6, qui est positionnée sur l'arête du renfort.

Un problème similaire se pose lors du positionnement du côté de caisse 3 par rapport au renfort 5, une fois que celui-ci est positionné sur la doublure de caisse 4.

Le but de l'invention est de remédier aux inconvénients susmentionnés en présentant un type différent de butée de positionnement latéral de ces différents éléments de carrosserie les uns par rapport aux autres.

### Résumé de l'invention

A cet effet, l'objet principal de l'invention est un système de butée pour le positionnement latéral relatif d'éléments de carrosserie automobile, de préférence à la jonction du toit et du cadre de portières, entre un renfort de carrosserie et un autre élément de carrosserie, le système comprenant au moins une déformation ponctuelle d'un premier élément destiné à venir en contact avec un deuxième élément, le renfort de carrosserie constituant l'un de ces deux éléments.

Selon l'invention, la déformation partielle est constituée d'un double crevé formé par deux fentes parallèles longitudinales, entre lesquelles la partie découpée est déformée de manière à se trouver vers l'intérieur de l'habitacle lorsque le premier élément sur lequel elle est formée est mis en place.

Dans une première mise en oeuvre de ce système, le premier élément est le renfort utilisé entre la doublure de caisse et le côté de caisse, le deuxième élément étant la doublure de caisse.

Une réalisation préférentielle de la première mise en oeuvre prévoit que le côté de caisse possède également une butée pour son positionnement par rapport à l'ensemble constitué du renfort et de la doublure de caisse, cette butée étant également obtenue par une déformation en double crevé formée par deux fentes parallèles longitudinales entre lesquelles la partie découpée est déformée vers l'intérieur de l'habitacle, lorsque le côté de caisse est mis en place sur l'ensemble constitué par le renfort et la doublure de caisse.

Dans une deuxième mise en oeuvre du système, le premier élément est le côté de caisse portant la butée, le deuxième étant le renfort de caisse placé entre le côté de caisse et la doublure de caisse.

Il est avantageux d'obtenir par emboutissage les déformations partielles constituant les butées.

### Liste des figures

L'invention et ses différentes caractéristiques techniques seront mieux comprises à la lecture de la description qui est accompagnée de six figures représentant respectivement :
- figure 1, un côté de caisse d'une automobile sur lequel on a localisé l'invention ;
- figure 2, une coupe selon la ligne A-A de la figure 1 d'un élément de carrosserie de l'art antérieur ;
- figure 3, une coupe selon la ligne A-A de la figure 1 d'un autre élément de carrosserie selon l'art antérieur ;
   ces trois figures étant déjà décrites ;
- figure 4, une coupe d'une première réalisation du système selon l'invention ;
- figure 5, une vue partielle cavalière d'une réalisation de l'invention ; et
- figure 6, une coupe d'une deuxième réalisation de l'invention.

### Description détaillée de deux réalisations de l'invention

En référence à la figure 4, il est facile de constater comment est agencée la butée 10 selon l'invention par rapport à la butée 6 de la figure 3. En effet, le renfort 15 placé entre le côté de caisse 3 et la doublure de caisse 4 a subi un emboutissage partiel avec cisaillage, ou un autre procédé équivalent, c'est-à-dire un double découpage parallèle selon deux fentes, de manière à ce qu'une partie possédant deux côtés parallèles soit emboutie vers l'intérieur de l'habitacle une fois que le renfort est mis en place, avec un cisaillement des deux côtés de l'embouti. La butée 10 est donc un emboutissage en double crevé. Le côté intérieur 11 de la butée 10 est en contact avec la paroi extérieure de la doublure de caisse 4 remplissant ainsi la fonction de butée, dans le but d'assurer le positionnement latéral du renfort 15 par rapport à la doublure de caisse 4.

Cette butée 10, obtenue par emboutissage avec deux découpages latéraux, n'a que quelques centimètres de longueur et n'a donc pas besoin d'être formée sur une grande longueur.

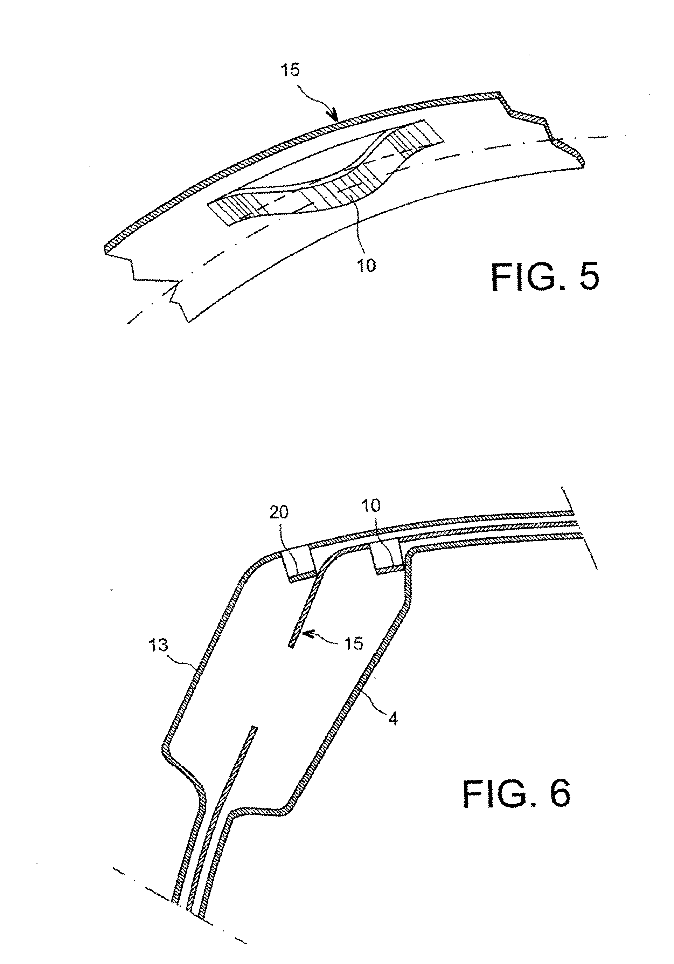

La figure 5 permet de voir, en perspective, la butée 10 sur le renfort 15. Une telle butée 10 est moins volumineuse car plus ponctuelle que la butée 6 décrite à la figure 3. Un avantage majeur est que l'arête de butée constituée par le côté 11 de la butée 10 n'est pas altérée, puisqu'elle est obtenue par découpage. Sa surface est donc nette, sans aspérité.

La figure 6 montre qu'une même butée 20 peut être formée et utilisée sur le côté de caisse 3 pour positionner ce dernier par rapport à l'ensemble constitué par le renfort 15 sur la doublure de caisse 4 au moyen de sa butée 10. Les deux butées 10 et 20 peuvent être dans le même plan, ce qui n'est pas possible dans le cas des deux emboutis transversaux selon l'art antérieur, tel que représenté par les figures 2 et 3.

On précise qu'un mode d'obtention de ce type de butée est obtenu en une seule opération d'emboutissage vertical. Tout autre procédé d'obtention peut être utilisé dès l'instant que le côté 11 des butées 10 et 20 possède une arête nette et sans altération.

La description est faite relativement à la jonction du toit et du cadre de portière, mais elle peut s'appliquer à d'autres endroits d'une carosserie d'automobile où l'on retrouve un élément de carrosserie du type côté de caisse 3 sur deux éléments de structure du type renfort 15 et doublure de caisse 4, un des deux éléments de structure n'étant pas accessible. On pense en particulier à un renfort de pied milieu qui est une structure verticale entre la porte avant et la porte arrière du véhicule.

Le côté avant de caisse vient se monter sur la structure de pied milieu formé de deux renforts, un renfort accessible depuis l'intérieur du véhicule, et un renfort intermédiaire entre ce premier renfort et le côté de caisse.

On pense également au montage de la vitre de custode.

## Revendications

1. Système de butée pour le positionnement latéral relatif d'éléments de carrosserie automobile entre un renfort de carrosserie (15) et un autre élément de la carrosserie, le système comprenant au moins une butée (10, 20) obtenue par déformation ponctuelle sur un premier élément de la carrosserie destiné à venir en contact avec un deuxième élément de carrosserie, le renfort de carrosserie (15) constituant l'un de ces deux éléments de carrosserie, **caractérisé en ce que** la au moins une butée (10, 20) obtenue par déformation partielle est un double crevé formé par deux fentes parallèles longitudinales entre lesquelles la partie découpée est déformée de manière à se trouver vers l'intérieur de l'habitacle, lorsque le premier élément est mis en place.

2. Système selon la revendication 1, **caractérisé en ce qu'**il concerne la jonction du toit (1) et du cadre de portières (2).

3. Système selon la revendication 1, **caractérisé en ce que** le premier élément est le renfort (15) utilisé entre une doublure de caisse (4) et le côté de caisse (3, 13), le deuxième élément étant la doublure de caisse (4).

4. Système selon la revendication 3, **caractérisé en ce que** le côté de caisse (13) possède également une butée (20) constituée par une déformation en double crevé, formée par deux fentes parallèles longitudinales entre lesquelles la partie découpée est déformée vers l'intérieur de l'habitacle, lorsqu'elle est positionnée contre l'ensemble constitué du renfort (15) et de la doublure de caisse (4).

5. Système selon la revendication 1, **caractérisé en ce que** le premier élément est le côté de caisse (13) portant la butée (20), le deuxième élément étant le renfort de carrosserie (15) placé entre le côté de caisse (3) et la doublure de caisse (4).

6. Système selon la revendication 1, **caractérisé en ce que** la au moins une butée (10, 20) est obtenue par emboutissage.

## Claims

1. Abutment system for the relative lateral positioning of automobile bodywork elements between a bodywork reinforcement (15) and another element of the bodywork, the system comprising at least one abutment (10, 20) obtained by localized deformation on a first element of the bodywork that is intended to come into contact with a second bodywork element, the bodywork reinforcement (15) constituting one of these two bodywork elements, **characterized in that** the at least one abutment (10, 20) obtained by partial deformation is a double-lanced tab formed by two longitudinal parallel slits between which the cut-out portion is deformed so as to be situated towards the inside of the passenger compartment when the first element is put in place.

2. System according to Claim 1, **characterized in that** it concerns the junction between the roof (1) and the door frame (2).

3. System according to Claim 1, **characterized in that** the first element is the reinforcement (15) used between a body liner (4) and the body side (3, 13), the second element being the body liner (4).

4. System according to Claim 3, **characterized in that** the body side (13) also has an abutment (20) consisting of a deformation, in the form of a double-lanced tab, formed by two longitudinal parallel slits between the which the cut-out portion is deformed towards the inside of the passenger compartment when this portion is positioned against the assembly consisting of the reinforcement (15) and the body liner (4).

5. System according to Claim 1, **characterized in that** the first element is the body side (13) bearing the abutment (20), the second element being the bodywork reinforcement (15) placed between the body side (3) and the body liner (4).

6. System according to Claim 1, **characterized in that** the at least one abutment (10, 20) is obtained by stamping.

## Patentansprüche

1. Anschlagsystem für die relative seitliche Positionierung von Kraftfahrzeugkarosserieelementen zwischen einer Karosserieverstärkung (15) und einem weiteren Element der Karosserie, wobei das System wenigstens einen Anschlag (10, 20) enthält, der durch punktuelle Verformung an einem ersten Element der Karosserie erhalten wird und dazu bestimmt ist, mit einem zweiten Karosserieelement in Kontakt zu gelangen, wobei die Karosserieverstärkung (15) eines dieser zwei Karosserieelemente bildet, **dadurch gekennzeichnet, dass** der wenigstens eine Anschlag (10, 20), der durch partielle Verformung erhalten wird, ein Doppeleinschnitt ist, der durch zwei longitudinale parallele Schlitze gebildet ist, zwischen denen der ausgeschnittene Teil in der Weise verformt ist, dass er sich innerhalb der Fahrgastzelle befindet, wenn das erste Element angeordnet ist.

2. System nach Anspruch 1, **dadurch gekennzeichnet, dass** es die Verbindung des Dachs (1) mit dem Wagentürrahmen (2) betrifft.

3. System nach Anspruch 1, **dadurch gekennzeichnet, dass** das erste Element die Verstärkung (15) ist, die zwischen der Wagenkastenverkleidung (4) und der Wagenkastenaußenseite (3, 13) verwendet wird, wobei das zweite Element die Wagenkastenverkleidung (4) ist.

4. System nach Anspruch 3, **dadurch gekennzeichnet, dass** die Wagenkastenaußenseite (13) ebenfalls einen Anschlag (20) besitzt, der durch eine Doppeleinschnittverformung gebildet ist und durch zwei longitudinale parallele Schlitze geformt ist, zwischen denen der ausgeschnittene Teil in den Fahrgastraum verformt ist, wenn er an der durch die Verstärkung (15) und die Wagenkastenverkleidung (4) gebildeten Gesamtheit positioniert ist.

5. System nach Anspruch 1, **dadurch gekennzeichnet, dass** das erste Element die Wagenkastenaußenseite (13) ist, die den Anschlag (20) trägt, wobei das zweite Element die Karosserieverstärkung (15) ist, die zwischen der Wagenkastenaußenseite (3) und der Wagenkastenverkleidung (4) angeordnet ist.

6. System nach Anspruch 1, **dadurch gekennzeichnet, dass** der wenigstens eine Anschlag (10, 20) durch Tiefziehen erhalten wird.
